Europäisches Patentamt

European Patent Office

Office européen des brevets

(19)

(11) Publication number: **0 204 561**
**A2**

# (12) EUROPEAN PATENT APPLICATION

(21) Application number: **86304267.7**

(22) Date of filing: **04.06.86**

(51) Int. Cl.⁴: **B 24 B 11/08**
**B 24 B 5/26**

(30) Priority: **04.06.85 JP 121278/85**
**04.06.85 JP 121279/85**

(43) Date of publication of application:
**10.12.86 Bulletin 86/50**

(84) Designated Contracting States:
**DE FR GB SE**

(71) Applicant: **Kabushiki Kaisha Toshiba**
**72, Horikawa-cho Saiwai-ku**
**Kawasaki-shi Kanagawa-ken 210(JP)**

(72) Inventor: **Hashimoto, Masahiro c/o Patent Division**
**1-1 Shibaura Minato-ku**
**Tokyo(JP)**

(72) Inventor: **Morijiri, Takeo c/o Patent Division**
**1-1 Shibaura Minato-ku**
**Tokyo(JP)**

(72) Inventor: **Shindoh, Takahiko c/o Patent Division**
**1-1 Shibaura Minato-ku**
**Tokyo(JP)**

(74) Representative: **Freed, Arthur Woolf et al,**
**MARKS & CLERK 57-60 Lincoln's Inn Fields**
**London WC2A 3LS(GB)**

(54) **Method for manufacture of ceramic parts.**

(57) A method for the manufacture of ceramic parts comprises using a centerless grinder has a cylindrical cutting grindstone (7) with a plurality of grooves (7a) formed on the cutting surface thereof, a cylindrical adjusting grindstone (8) disposed substantially parallelly to the cutting grindstone (7), and a blade (9) disposed between the cutting grindstone (7) and the adjusting grindstone (8), infeeding a round ceramic bar (10) to the centerless grinder, rotating the cutting grindstone (7) and the adjusting grindstone (8) in the direction of the round ceramic bar, thereby causing the grooves (7a) on the surface of the cutting grindstone (7) to grind the round ceramic bar (10).

FIG. I

EP 0 204 561 A2

-1-

# METHOD FOR MANUFACTURE OF CERAMIC PARTS

The present Application claims priority of Japanese Patent Application Serial No. 85/121278 and 85/121279 respectively filed on June 4, 1985.

This invention relates to a method for the manufacture of ceramic parts, which is capable of producing ceramic spheres and rollers of satisfactory sphericity and dimensional accuracy at high productivity.

Recently, ball bearing made of ceramic material are being developed as ball bearings for use in high-temperature liquids such as molten metals.

The balls to be used in such ball bearing can be manufacture, for example, by preparatorily molding ceramic powder in the shape of spheres by using a binder and generally sintering the spheres. By this method, however, balls of satisfactory sphericity and dimensional accuracy are not easily obtained. It is, in fact, impossible to manufacture directly such balls by the hot

2

press. By this method, therefore, balls of satisfactory abrasion resistance and mechanical strength cannot be manufactured.

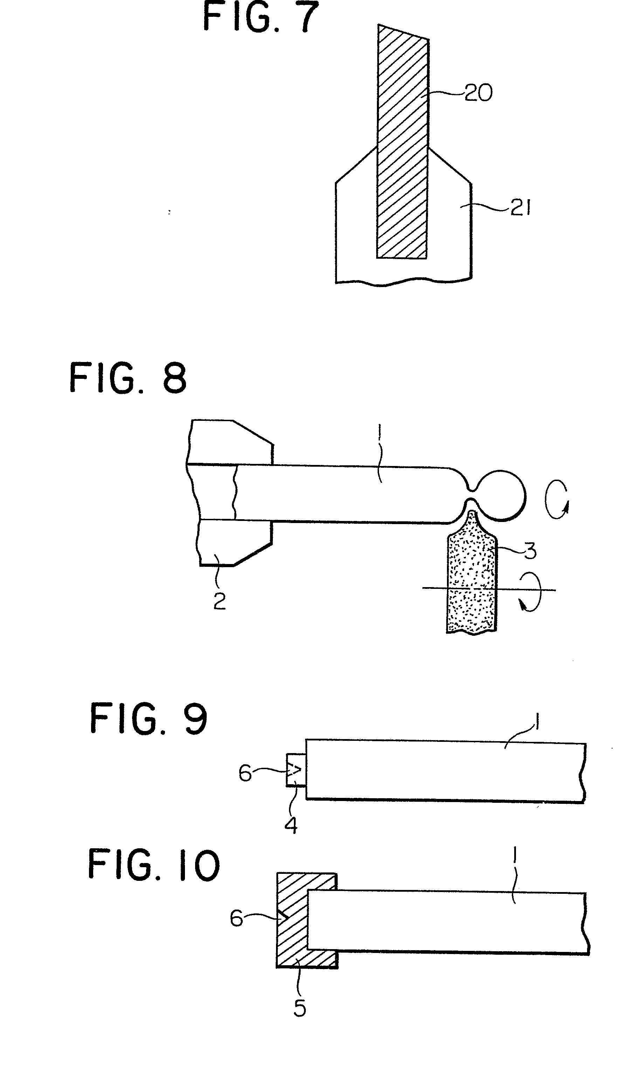

For the manufacture of balls which excel in sphericity, dimensional accuracy, abrasion resistance, and mechanical strength, therefore, there has been followed the procedure which comprises producing a sintered ceramic body in the shape of a flat plate by hot press molding, cutting the flat plate into square bars, fabricating the square bars into round bars, holding each round ceramic bar 1 in a chuck 2 as illustrated in Fig. 8, and shaping spheres one by one successively inwardly from the other free end of the round bar 1 with a grindstone 3 possessed of cutting faces each of a quadrant section.

The conventional method of the principle described above, however, is deficient in productivity. Moreover, since the round bar under fabrication is ground as kept in place fast at one end thereof, the method entails the drawback that balls of satisfactory sphericity and dimensional accuracy are obtained only with difficulty. It is conceivable to manufacture a multiplicity of balls all at once by keeping a plurality of grindstones 3 of the construction shown in Fig. 8 connected side by side and, at the same time, supporting a round ceramic bar 1 axially at the opposite ends thereof and rotating the round ceramic bar 1 against the row of grindstones 3. In the method of this principle, for the purpose of supporting the round ceramic bar in place by the opposite ends thereof, it is necessary to attach steel blocks 4 fast one each to the opposite ends of the round ceramic bar 1 as illustrated in Fig. 9 or fasten steel jigs 5 of a cross section of the shape of three sides of a square to the opposite ends by shrinkage fit or screwing as illustrated in Fig. 10. Thus, this method entails the drawback that the setup consumes a great deal of time. In Fig. 9, the numeric symbol 6 denotes a center hole.

An object of this invention is to provide a method for the manufacture of ceramic parts, which enables ceramic spheres or rollers satisfactory sphericity and dimensional accuracy and excellent abrasion resistance and mechanical strength to be manufactured in high productivity.

Another object of this invention is to decrease the abrasion of the surface of a blade to be passed on the material under fabrication in the apparatus mentioned above.

A further object of this invention is to ensure constant manufacture of ceramic spheres and rollers of high sphericity by having grindstones ground as occasion demands.

Fig. 1 is a front view of the condition in which a centerless grinder used in the present invention effects the grinding aimed at.

Fig. 2 is a front view of the condition in which a centerless grinder used in the present invention for grinding ceramic spheres.

Fig. 3 is a diagram for of a procedure for the manufacture of ceramic spheres on accordance with the present invention.

Fig. 4 is a plan view of the condition in which a centerless grinder used in the present invention for grinding ceramic rollers.

Fig. 5 is a diagram for a procedure for the manufacture of ceramic rollers on accordance with this invention.

Fig. 6 is a front view of a typical example of the centerless grinder of the present invention.

Fig. 7 is a front view of another example of the centerless grinder of the present invention.

Fig. 8 is a diagram of the conventional method for the manufacture of ceramic spheres.

Fig. 9 and Fig. 10 are diagrams each illustrating an end part of a round ceramic bar in the conventinal method for the manufacture of ceramic parts.

The method of the present invention for the manufacture of ceramic parts comprises a centerless grinder has a cylinderical cutting grindstone with a plurarity of grooves formed on the cutting surface thereof, a cylindrical adjusting grindstone disposed substantially parallelly to the cutting grindstone, and a blade disposes between two aforementioned grindstones (hereinafter referred to as a "centerless grinder"), whereby the manufacture of ceramic parts is accomplised by infeeding this centerless grinder to a round ceramic bar thereby causing the aforementioned grooves on the cutting grindstone to grind the round ceramic bar.

The blade in the centerless grinder of the aforementioned manufacturing method which is used for keeping the work and for forming a path for the work to be placed between the cutting grindstone and the adjusting grindstone is characterized by having at least the top part thereof formed of sintered silicon nitride.

Now, this invention will be described below with reference to the drawings depicting a working example thereof.

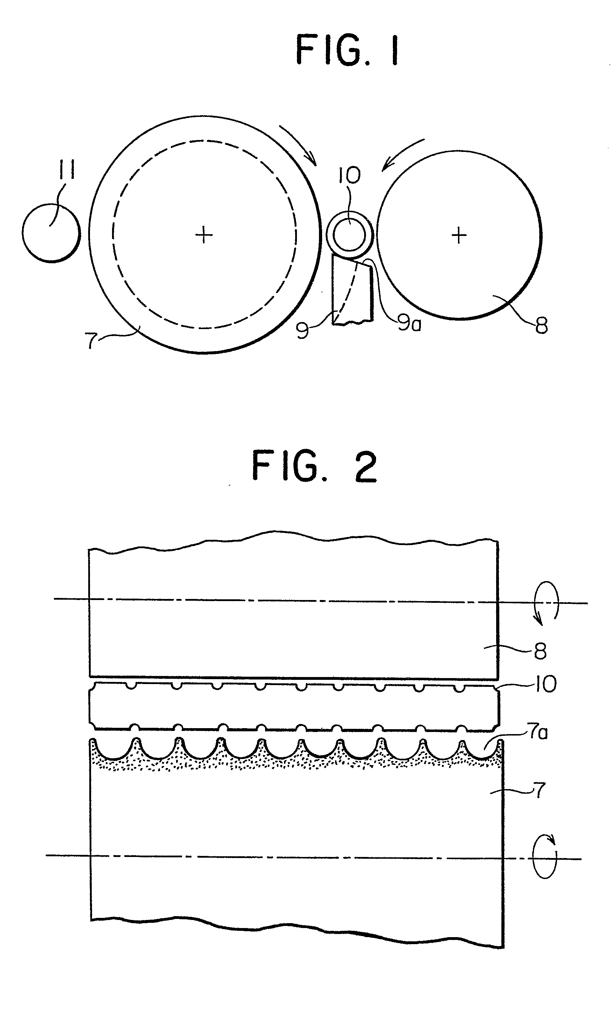

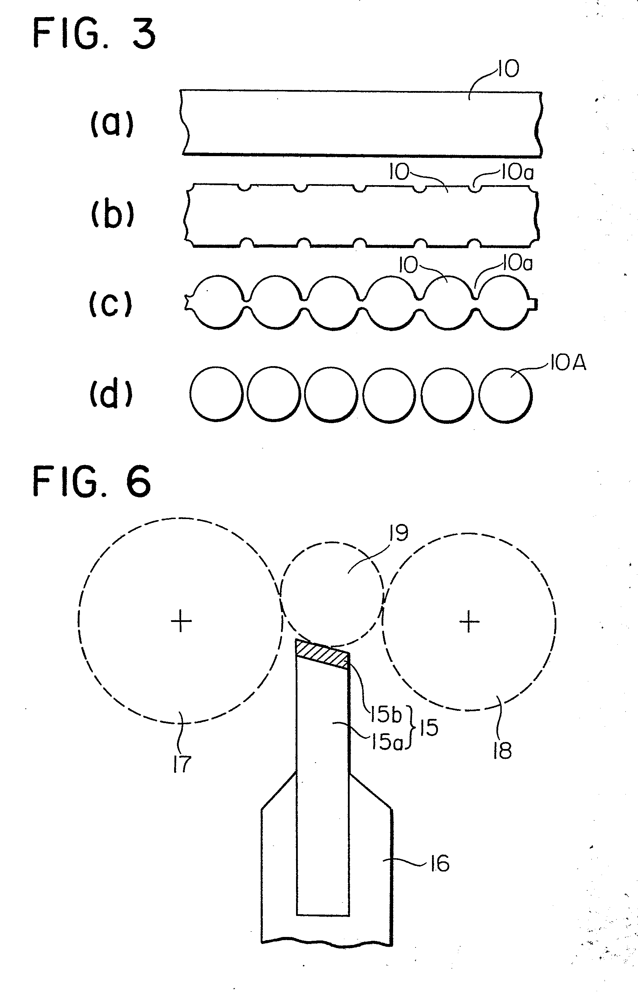

Fig. 1 is illustrating the condition in which a centerless grinder used in the present invention, Fig. 2 and Fig. 3 are illustrating one example of the manufacture of the ceramic spheres. With reference to these drawings the centerless grinder is formed disposing a cutting grindstone 7 having a plurality of grooves 7a of an arcurate cross section formed on the cutting surface thereof and a cylindrical adjusting grindstone 8 substantially parallelly to each other, and blade 9 disposed under the center line connecting two aforementioned grindstones, possessing an inclined surface 9a slanted toward the adjusting grindstone 8.

The grooves 7a of an arcuate cross section on the cutting grindstone 7 are formed a surface layer of a mixture of for example diamond abrasive grain with phenol resin on a supporting cylinder not shown in the diagram.

CD (continuous dressing) grindstone 11 having a grinding surface conforming to the grooves 7a of the cutting grindstone 7, though not illustrated, are kept in contact with the cutting grindstone 7 so as to keep the grooves 7a of the cutting grindstone 7 at need or constantly in an accurately hemispherical shape.

The adjusting grindstone 8 has its surface coated with a rubbery substance such as polyurethane rubber which has a large friction coefficient. An ordinary adjusting grindstone which is not coated with any rubbery substance can also be used. The inclined surface 9a of the blade 9 is formed by joining a ceramic chip.

In the diagram, the numeric symbol 10 denotes a round ceramic bar produced by cutting a square bar from a silicon nitride ($Si_3N_4$) plate molded by the hot press method and grinding the square bar in a cylindrical shape.

In the working example described above, the round ceramic bar 10 is ground with the rotation ratio of the cutting grindstone 7 and the adjusting grindstone 8 of the centerless grinder adjusted roughly at 1 : 3. As the grinding work proceeds, the round bar is transformed as illustrated in Fig. 3 from a cylindrical shape (a) to a shape having grooves 10a formed thereon as equally spaced (b), then to a shape having the grooves deepened and the inclined surfaces of these grooves sunken into an arcurate curve(c), and finally to a shape having independent spheres 10A formed therein (d). The ceramic spheres 10A thus obtained have a sphericity of 15 μm,

a dimensional accuracy (dispersion) of 8.9 ± 0.02 mm, a surface roughness of 1 to 2.8 μm Rmax, and

a processing efficiency of 1p/1min to 1p/2mins.

In contrast, when ceramic spheres are produced one by one from a round ceramic bar 10 of the same material by the conventioinal rotation method which is characterized by keeping the round bar fast in place at one end thereof, they have a sphericity of 60 μm, a dimensional accuracy of 8.9 ± 0.15 mm, a surface roughness of 3 to 8 μm Rmax, and a processing efficiency of 1p/24mins to 1p/40mins.

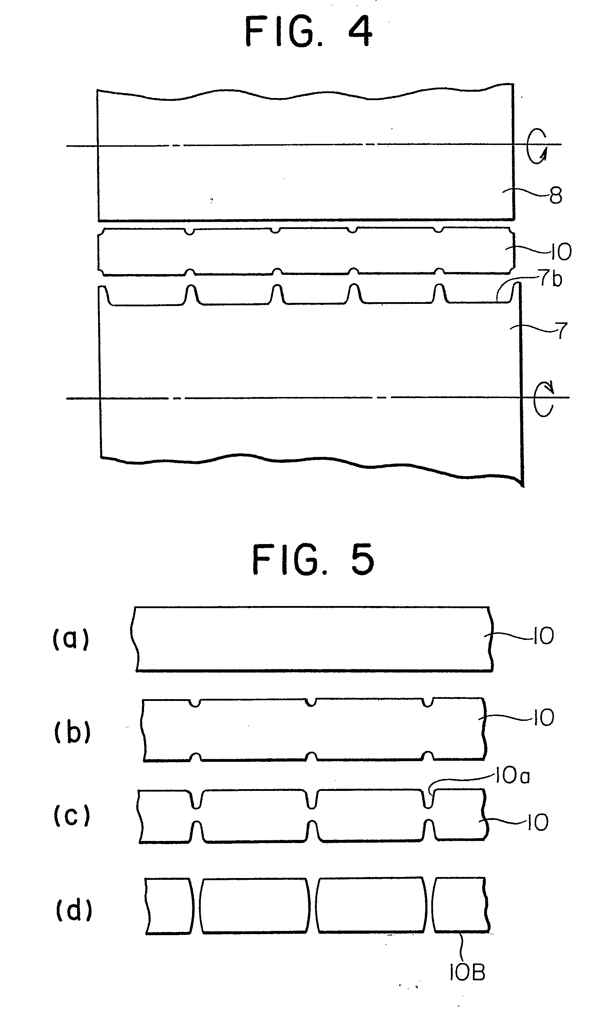

In the working example of the ceramic roller will be described with Fig. 4 and Fig.5. As shown in Fig. 4, in the same manner as a ceramic spheres, the ceramic bar 10 is ground with the rotation ratio of the cutting grindstone 7 and the adjusting grindstone 8 of the centerless grinder adjusted roughly at 1 : 3. As the grinding work proceeds, the round bar is transformed as illustrated in Fig. 5 from a cylindrical shape (a) to a shape having grooves 10a formed thereon as equally spaced (b), then to a shape having the grooves deepened and the arcuate curve is formed (c), and finally to a shape having independent rollers 10B formed therein (d). The ceramic rollers 10B thus obtained have a circularity of 15 μm, a dimensional accuracy (dispersion) of 9 ± 0.02 mm, a surface roughness of 1 to 3 μm Rmax, and a processing efficiency of 1p/1min to 1p/2mins. The numeric symbol 7b denotes the grooves of the cutting grindstone 7.

Now, the blade of the ceramic grinder will be described below with reference to Fig. 6.

The blade 15 of the present working example is formed by cutting a slant in the top part of a metallic supporting part 15a, joining a chip 15b of sintered silicon nitride ($Si_3N_4$) produced by the hot press fast to the slant, and causing the basal part of the supporting part to be held fast by a metallic holding member 16.

In this drawing, the numeric symbol 17 denotes a cutting grindstone, 18 an adjusting grindstone, and 19 a work blank.

The blade 20 shown in Fig. 7 is formed by molding its entire body with sintered silicon nitride by the hot press and causing the basal part thereof to be held fast by a metallic holding member 21.

When a round bar of sintered silicon nitride ($Si_3N_4$) 13 mm in diameter and 140 mm in length is ground by the through-feed method using the blade 9.5 mm in width formed as described above, the 200th round bar has a parallelism of 2 $\mu$m in the direction of length and 1 $\mu$m in the direction of diameter and a rigidity of 1 $\mu$m/kg. In contrast, when a work of the same material and the same dimensions is ground under the same conditions using a conventional blade (having a chip of hard metal joined by brazing to the top part of a metallic supporting member), the 200th round bar has a parallelism of 0.8 mm in the direction of length and 0.9 mm in the direction of diameter and a rigidity of 3 $\mu$m/kg. On the surface of the blade passed on the work, a depression of the shape of a crater 0.9 mm in depth at the center is formed because of abrasion.

As described above, the apparatus of the present invention enables ceramic parts having satisfactory sphericity and dimensional accuracy and excelling in abrasion resistance and mechanical strength to be manufactured in high productivity.

Further, the method permits a decrease in the wear the blade sustains on the surface thereof which is passed on the work under fabrication.

**0204561**

What is claimed is

1.      A method for the manufacture of ceramic parts, comprising using a centerless grinder having a cylindrical cutting grindstone(7) with a plurality of grooves(7a) formed on the cutting surface thereof, a cylindrical adjusting grindstone(8) disposed substantially parallelly to said cutting grindstone(7), and a blade(9) possessing between said cutting grindstone(7) and said adjusting grindstone(8),

        infeeding a round ceramic bar(10) to said centerless grinder, rotating said cutting grindstone(7) and said adjusting grindstone(8) in the direction of said round ceramic bar(10), thereby causing the grooves(7a) on the surface of said cutting grindstone(7) to grind said round ceramic bar(10).

2.      A method according to Claim 1, wherein said ceramic parts are made of sintered silicon nitrtide ($Si_3N_4$).

3.      A method according to Claim 2, wherein said sintered silicon nitride is formed by hot press sintering.

4.      A method according to Claim 1, wherein said blade(9) is disposed under the center line connecting said cutting grindstone(7) and said adjusting grindstone(8), possessing an inclined surface slanted toward said adjusting grindstone(8).

5.      A method according to Claim 1, wherein at least the top part of said blade(9a) is formed of sintered silicon nitride.

6.      A method according to Claim 1, whrein said centerless grinder has a continuous dressing grindstone(11) for grinding said cutting grindstone(7).

0204561

# FIG. 1

# FIG. 2

# FIG. 3

(a)  10

(b)  10  10a

(c)  10  10a

(d)  10A

# FIG. 6

19

17  15b  15a  15  18

16

# FIG. 4

8

10

7b

7

# FIG. 5

(a) 10

(b) 10

(c) 10a

10

(d)

10B

FIG. 7

20

21

FIG. 8

1

2

3

FIG. 9

6

4

1

FIG. 10

6

5

1